# EUROPÄISCHE PATENTSCHRIFT

(11) **EP 1 037 736 B1**
(45) Veröffentlichungstag und Bekanntmachung des Hinweises auf die Patenterteilung: **02.02.2005**
(21) Anmeldenummer: 98962418.4
(22) Anmeldetag: 07.12.1998
(51) Int. Cl.: B29C 47/08, F16C 33/10

(54) **GETRIEBE FÜR GLEICHLAUFENDEN DOPPELSCHNECKEN-EXTRUDER**
GEAR MECHANISM FOR A CO-ROTATING DOUBLE SCREW EXTRUDER
ENGRENAGE POUR EXTRUDEUSE A DEUX VIS A CO-ROTATION

(30) Priorität: 08.12.1997 DE 19754359
(43) Veröffentlichungstag der Anmeldung: 27.09.2000
(73) Patentinhaber: Funk, Michael, 90459 Nürnberg (DE)
(72) Erfinder: FUNK, Frank, D-34379 Calden (DE); SCHWARZE, Bernd, D-49565 Bramsche (DE)
(74) Vertreter: Matschkur, Lindner, Blaumeier Patent- und Rechtsanwälte
(86) Internationale Anmeldenummer: PCT/EP1998/007925
(87) Internationale Veröffentlichungsnummer: WO 1999/029486

(56) Entgegenhaltungen:
- EP-A- 0 265 005
- EP-A- 0 679 495
- EP-A- 0 728 569
- EP-A- 0 849 064
- CH-A- 513 349
- DE-A- 4 305 133
- US-A- 1 882 956

## Beschreibung

Die Erfindung betrifft ein Getriebe für gleichlaufende Doppelschnecken-Extruder mit einer Antriebswelle, mindestens einer Reduziergetriebestufe für eine dem Verwendungszweck angepaßte Drehzahl- und Drehmomentänderung, einer . Leistungsverzweigungsstufe und zwei Abtriebswellen gemäß dem Oberbegriff des Patentanspruchs 1.

Aus der EP-A-0679495 ist ein solches Getriebe für Doppelschnecken-Extruder bekannt. Es umfaßt eine Antriebswelle und mindestens eine Abtriebswelle, die von der Antriebswelle über mindestens ein auf dieser sitzendes schrägverzahntes Antriebsrad und mindestens ein auf der Abtriebswelle sitzendes schrägverzahntes Abtriebsrad antreibbar ist. Das Antriebsrad und das Abtriebsrad stehen mit axial beweglichen und schrägverzahnten Zwischenrädern im Eingriff, denen eine Axialkraftausgleichsvorrichtung zugeordnet ist. Der mit einer solchen Lösung erreichten gleichmäßigen Lastaufteilung auf beide Zwischenräder steht ein erhöhter Raumbedarf und ein vergleichsweise komplizierter Aufbau des Getriebes gegenüber.

In der EP 728 569 A1 ist ein gattungsgemäßes Getriebe beschrieben, bei dem zusätzliche Maßnahmen zur axialen Sicherung der Wellen in der Leistungsverzweigungsstufe erforderlich sind und durch die Art der Lagerung der Abstand der einzelnen Wellen relativ groß ist.

In der CH-A-513349 ist außerdem ein Stirnradgetriebe zur Übertragung eines Drehmomentes auf eine parallel zur Eingangsachse liegende zweite Achse, insbesondere zum Antrieb der zweiten Schnecke an Doppelschneckenpressen, beschrieben, wobei mehr als zwei schrägverzahnte Stirnradpaare verwendet werden, um eine Axialkraftaufhebung zu bewirken.

Der Erfindung liegt daher die Aufgabe zugrunde, ein Getriebe der eingangs genannten Art dahingehend weiterzuentwickeln, daß bei geringem Raumbedarf eine zuverlässige Übertragung auch hoher Drehmomente bei dem Einsatz angepaßter Drehzahl ermöglicht wird.

Die Lösung dieser Aufgabe ist im Patentanspruch 1 angegeben.

Erfindungsgemäß sind auf der Zwischenwelle und der Abtriebswelle gegensinnig schrägverzahnte Zahnräder angeordnet, die miteinander in Eingriff stehen und in ihrer Wirkung der Axialkraftaufhebung einer Pfeilverzahnung entsprechen.
Dadurch wird eine Leistungsverteilung mit anschließender Summierung erreicht, wobei die Teilleistungen exakt gleiche Beträge aufweisen. Durch diese Leistungsaufteilung kann die Anzahl der eingesetzten Zahnräder und Lager erhöht werden, was die Belastungen der einzelnen Bauteile reduziert.

Mit der Erfindung ist der Vorteil verbunden, daß infolge des geringen Raumbedarfs der Gleitlager der Achsabstand zwischen den einzelnen Wellen bei Übertragung vergleichbarer Drehmomente verringert werden kann. Andererseits besteht die Möglichkeit bei unverändertem Achsabstand der Abtriebswellen höhere Drehmomente zu übertragen, indem Wellen bzw. Zahnräder größeren Durchmessers oder größere Radiallager an nicht gleitgelagerten Wellen zum Einsatz kommen.

Die Abtriebswellen des Getriebes sind gleichsinnig drehbar, so daß mit dem Getriebe ein Doppelschnecken-Extruder mit gleichsinnig umlaufenden Schneckenwellen angetrieben werden kann.

Zur weiteren Reduzierung des Achsabstandes der beiden Abtriebswellen ist der Leistungsverzweigungsstufe nachgeordnet mindestens eine Zwischenwelle, auf die ein Teil der Leistung übertragen wird. Zusätzlich bietet sich hierbei die Möglichkeit der Drehrichtungsumkehr.

Der Vorteil einer Verringerung des Achsabstandes der Abtriebswellen kann auch . erreicht werden, indem die Zwischenwelle direkt in eine Abtriebswelle übergeht.

Die Zwischenwelle und eine Abtriebswelle stehen durch Zahnräder im direkten Eingriff, was zu einer Leistungsweiterleitung mit Drehrichtungsumkehr führt.

Hierbei ist es zweckmäßig, die Zwischenwelle und die Abtriebswelle jeweils geteilt auszuführen und die Teilwellen durch eine Kupplung zu verbinden.

In bevorzugter konstruktiver Auslegung eines Getriebes mit gleichsinnig drehenden Abtriebswellen erfolgt die Leistungsverzweigung auf eine Zwischenwelle und eine erste Abtriebswelle durch Zahnräder, die in direktem Eingriff miteinander stehen, wobei die Zwischenwelle mit einer zweiten Abtriebswelle über Zahnräder kämmt.

Durch Schmierung der Gleitlager mit Öl kann ein hydrodynamischer Schmierfilm aufgebaut werden, der zu einer Erhöhung der Tragfähigkeit der Gleitlager führt.

Durch die spezielle Gleitschicht auf der Gleitoberfläche der Gleitlager ist ein zuverlässiger Betrieb auch im Mischreibungsbereich möglich.

Sind in der Gleitoberfläche der Gleitlager Vertiefungen vorgesehen, so wird die Schmierkeilbildung begünstigt. Zur Verbesserung der Schmierölzuführung und damit der Wärmeabfuhr können die Vertiefungen als Kanäle ausgebildet sein. Verlaufen diese Kanäle im Winkel zur Radialebene und im wesentlichen parallel, wird die Schleppströmung des Schmiermittels zu einer weiteren Wärmeabfuhr genutzt. Dadurch ist die sonst erforderliche Druckölzuführung nicht notwendig.

Die Erfindung soll nachstehend anhand eines Ausführungsbeispiels mit zugehörigen Zeichnungen näher erläutert werden. Es zeigen
- Figur 1: eine schematische Darstellung eines geöffneten, erfindungsgemäßen Getriebes,
- Figur 2: eine Prinzipdarstellung einer Einbaulage der Gleitlager im Getriebe und
- Figur 3: geeignete Oberflächenstrukturen der für die erfindungsgemäßen Getriebe verwendeten Gleitlager.

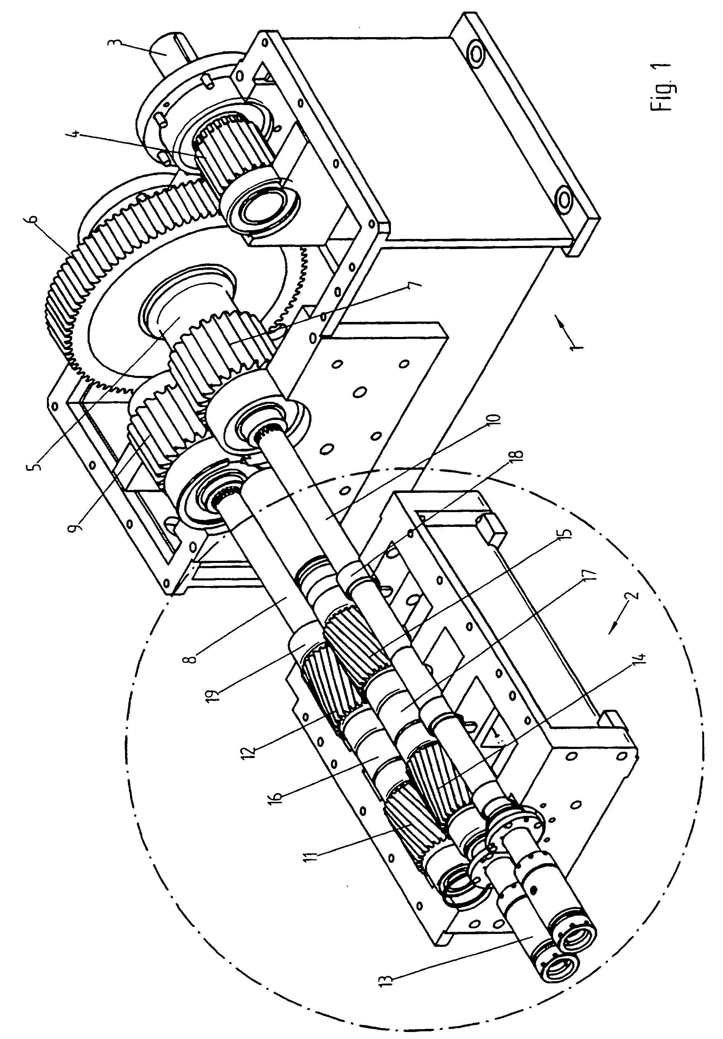

Das in Figur 1 dargestellte Getriebe für einen Doppelschnecken-Extruder besteht aus einem Grundgetriebe 1 und einem Zwischengetriebe 2. Die Antriebsleistung wird über die als Ritzelwelle 3 ausgebildete Antriebswelle auf das Ritzel 4 übertragen, das mit dem auf der Ritzelwelle 5 angeordneten Zahnrad 6 kämmt. Das auf der Ritzelwelle 5 angeordnete Verteilerritzel 7 steht mit einem auf einer Zwischenwelle 8 befindlichem Zwischenritzel 9 im Eingriff. Über das Verteilerritzel 7 und das Zwischenritzel 9 wird die Leistungsverzweigung von der Ritzelwelle 5 auf die Zwischenwelle 8 und eine Abtriebswelle 10 erreicht.

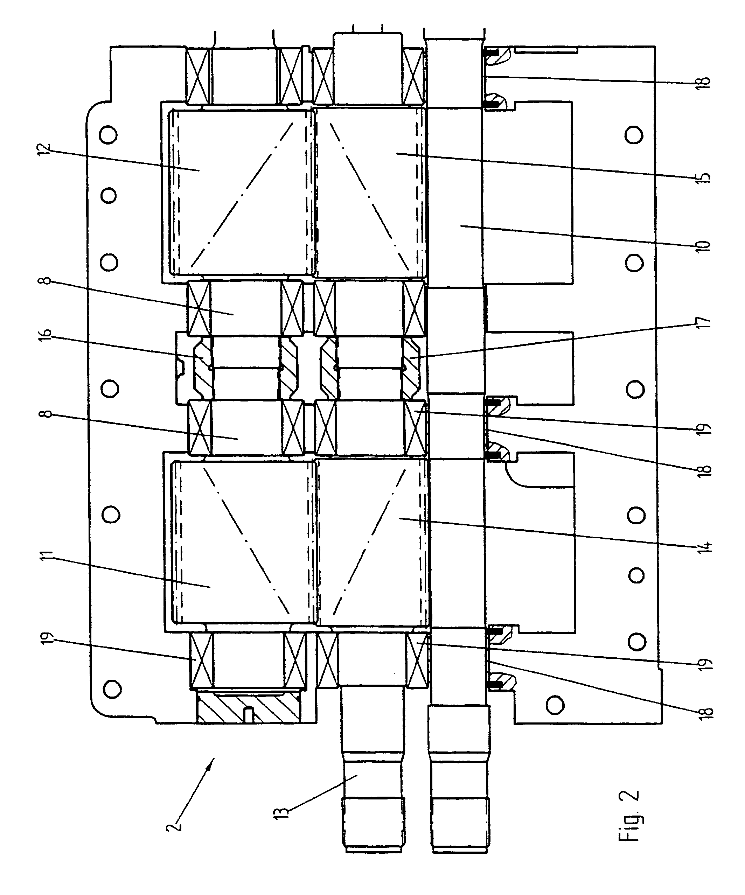

Die Zwischenwelle 8 trägt im Bereich des Zwischengetriebes 2 zwei gegensinnig schrägverzahnte Zahnräder 11 und 12, die mit auf einer weiteren Abtriebswelle 13 angeordneten, entsprechend verzahnten Zahnrädern 14 und 15 im Eingriff stehen. Die Zwischenwelle 8 und die Abtriebswelle 13 sind aus Teilwellen zusammengesetzt, deren Teilung zwischen den Zahnrädern 11 und 12 bzw. 14 und 15 vorgesehen und deren Verbindung über Wellenkupplungen 16 und 17 hergestellt ist wie in Figur 2 ersichtlich.

Wie weiterhin aus Figur 2 erkennbar, ist die Abtriebswelle 10 in Gleitlagern 18 gelagert, wogegen die Zwischenwelle 8 und die Abtriebswelle 13 in Wälzlagern 19 geführt sind.

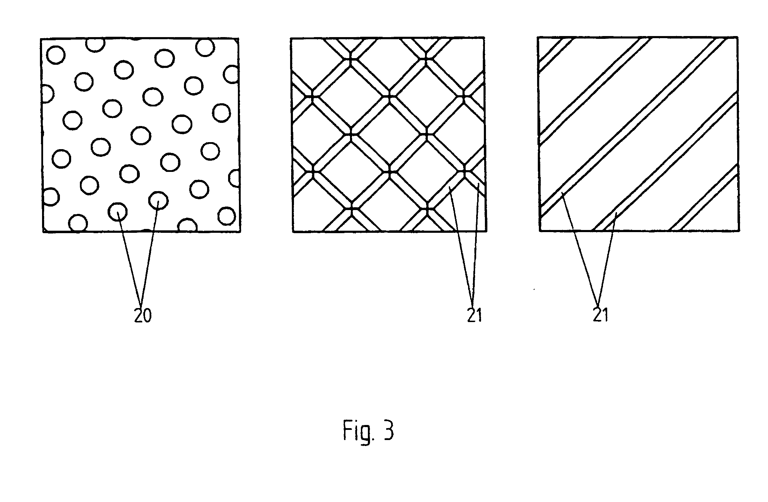

Geeignete Oberflächenstrukturen der Gleitoberflächen der Gleitlager sind in Figur 3 dargestellt. Dabei können in die Gleitoberfläche des Gleitlagers Vertiefungen 20 eingebracht sein, zwischen denen keine Verbindung besteht, so daß ein Schmiermittelaustausch weitgehend unterbleibt. Die Vertiefungen 20 können aber auch als Kanäle 21 ausgebildet sein, in denen ein Schmierstofftransport erfolgt, wodurch eine erhöhte Wärmeableitung erreichbar ist. Zur Gewährleistung eines definierten Schmiermittelumlaufes sind die Kanäle 21 im Winkel zur Radialebene angeordnet und verlaufen im wesentlichen parallel.

### Bezugszeichenliste:

- (1): Grundgetriebe
- (2): Zwischengetriebe
- (3): Ritzelwelle
- (4): Ritzel
- (5): Ritzelwelle
- (6): Zahnrad
- (7): Verteilerritzel
- (8): Zwischenwelle
- (9): Zwischenritzel
- (10): Abtriebswelle
- (11), (12): Zahnrad
- (13): Abtriebswelle
- (14), (15): Zahnrad
- (16), (17): Wellenkupplung
- (18): Gleitlager
- (19): Wälzlager
- (20): Vertieferungen
- (21): Kanäle

## Patentansprüche

1. Getriebe für gleichlaufende Doppelschnecken-Extruder, mit einer eine Antriebswelle (3) enthaltenden Reduziergetriebestufe (1) für eine dem Verwendungszweck angepaßte Drehzahl- und Drehmomentenänderung, mit einer Leistungsverzweigungsstufe (7, 9), der mindestens eine Zwischenwelle (8) nachgeordnet ist, und mit einer ersten und einer zweiten Abtriebswelle (13, 10), wobei die Zwischenwelle mit auf der ersten Abtriebswelle (13) befindlichen Zahnrändern (14, 15) im Eingriff steht und wobei die zweite Abtriebswelle (10) direkt aus der Leistungsverzweigungsstufe (7, 9) angetrieben wird, **dadurch gekennzeichnet, daß** auf der Zwischenwelle (8) gegensinnig schräg verzahnte Zahnräder (11, 12) angeordnet sind, die mit auf der ersten Abtriebswelle (13) befindlichen Zahnrädern (14, 15) im Eingriff stehen und in Ihrer Wirkung der Axialkraftaufhebung einer Pfeilverzahnung entsprechen und daß die zweite Abtriebswelle (10) in Gleitlagern (18) geführt ist, während die erste Abtriebswelle (13) und die Zwischenwelle (8) in Wälzlagern geführt sind.

2. Getriebe nach Anspruch 1, **dadurch gekennzeichnet, daß** die Zwischenwelle (8) und eine Abtriebswelle (13) jeweils geteilt ausgeführt und die Teilwellen durch eine Kupplung (16, 17) verbunden sind.

3. Getriebe nach Anspruch 1 oder 2, **dadurch gekennzeichnet, daß** die Leistungsverzweigung auf eine Zwischenwelle (8) und eine Abtriebswelle (10) durch Zahnräder (7, 9) erfolgt, die in direktem Eingriff miteinander stehen und daß die Zwischenwelle (8) mit einer weiteren Abtriebswelle (13) über Zahnräder (11. 12, 14, 15) kämmt.

4. Getriebe nach Anspruch 1, **gekennzeichnet durch** einen hydrodynamischen Schmierfilm aufbauende Gleitlager (18).

5. Getriebe nach Anspruch 4, **dadurch gekennzeichnet, daß** die Gleitoberfläche der Gleitlager (18) eine Gleitschicht aufweist, die speziell im Mischreibungsbereich wirkt.

6. Getriebe nach Anspruch 4, **dadurch gekennzeichnet, daß** die Gleitoberfläche der Gleitlager (18) Vertiefungen (20) aufweist.

7. Getriebe nach Anspruch 6, **dadurch gekennzeichnet, daß** die Vertiefungen (20) als Kanäle (21) ausgebildet sind.

8. Getriebe nach Anspruch 7, **dadurch gekennzeichnet, daß** die Kanäle (21) im Winkel zur Radialebene und im wesentlichen parallel verlaufen

## Claims

1. Gear mechanism for a co-rotating double-screw extruder, having a reducing gear stage (1) comprising a drive shaft (3) for changing the rpm and torque according to the intended use, also having a torque division stage (7, 9), downstream of which at least one intermediate shaft (8) is connected, and further having first and second output shafts (13, 10), the intermediate shaft being in mesh with toothed rims (14, 15) located on the first output shaft (13) and the second output shaft (10) being driven direct from the torque division stage (7, 9), **characterised in that** on the intermediate shaft (8) are disposed toothed rims (11, 12) which are splined obliquely in opposite directions and which are in mesh with toothed rims (14, 15) located on the first output shaft (13), and which correspond in their action to the axial force neutralisation of herringbone gearing, and **in that** the second output shaft (10) is guided in slide bearings (18), whilst the first output shaft (13) and the intermediate shaft (8) are guided in roller bearings.

2. Gear mechanism according to claim 1, **characterised in that** the intermediate shaft (8) and one output shaft (13) are each formed divided and the partial shafts are connected by a coupling (16, 17).

3. Gear mechanism according to claim 1 or 2, **characterised in that** the torque is divided between an intermediate shaft (8) and a output shaft (10) by means of gearwheels (7, 9), which are directly in mesh with one another and **in that** the intermediate shaft (8) meshes with a further output shaft (13) via gearwheels (11, 12, 14, 15).

4. Gear mechanism according to claim 1, **characterised by** a slide bearing (18) building up a hydrodynamic lubricating film.

5. Gear mechanism according to claim 4, **characterised in that** the sliding surface of the slide bearing (18) has a sliding coating which operates particularly in the mixed friction range.

6. Gear mechanism according to claim 4, **characterised in that** the sliding surface of the slide bearing (18) has indentations.

7. Gear mechanism according to claim 6, **characterised in that** the indentations (20) are formed as grooves (21).

8. Gear mechanism according to claim 7, **characterised in that** the grooves (21) extend at an angle to the radial plane and substantially parallel to one another.

## Revendications

1. Engrenage pour extrudeuse à double vis sans fin à co-rotation, du type comportant un étage réducteur (1) contenant un arbre d'entraînement (3) destiné à réduire la vitesse de rotation et le couple de rotation en fonction de l'application prévue, un étage de dédoublement de charge (7, 9) après lequel est monté au moins un arbre intermédiaire (8), et un premier et un second arbres de sortie (13, 10), l'arbre intermédiaire étant en prise avec des engrenages (14, 15) se trouvant sur le premier arbre de sortie (13) et le second arbre de sortie (10) étant entraîné directement depuis l'étage de dédoublement de charge (7, 9), **caractérisé en ce que** sur l'arbre intermédiaire (8) sont montés des engrenages à dentures obliques de sens opposés (11, 12), qui sont en prise avec les engrenages (14, 15) se trouvant sur le premier arbre de sortie (13) et qui, par leur action correspondent à l'annulation des forces axiales d'une denture à chevrons et **en ce que** le second arbre de sortie (10) est guidé par des coussinets lisses, tandis que le premier arbre de sortie (13) et l'arbre intermédiaire (8) sont guidés dans des paliers à galets.

2. Engrenage selon la revendication 1, **caractérisé en ce que** l'arbre intermédiaire (8) et un arbre de sortie (13) sont chacun réalisés par portions, et les portions sont réunies par un accouplement (16, 17).

3. Engrenage selon l'une ou l'autre des revendications 1 ou 2, **caractérisé en ce que** le dédoublement de charge se produit sur un arbre intermédiaire (8) et un arbre de sortie (10) par l'intermédiaire d'engrenages (7, 9) qui sont en prise directe l'un avec l'autre, et **en ce que** l'arbre intermédiaire (8) attaque un autre arbre de sortie (13) par l'intermédiaire d'engrenages (11, 12, 14, 15).

4. Engrenage selon la revendication 1, **caractérisé par** un coussinet lisse créant un film lubrifiant hydrodynamique (18).

5. Engrenage selon la revendication 4, **caractérisé en ce que** la surface lisse du coussinet lisse (18) présente une couche glissante qui agit spécialement dans la région de frottement mixte.

6. Engrenage selon la revendication 4, **caractérisé en ce que** la surface lisse du coussinet lisse (18) présente des creux (20).

7. Engrenage selon la revendication 6, **caractérisé en ce que** les creux (20) constituent des canaux (21).

8. Engrenage selon la revendication 7, **caractérisé en ce que** les canaux (21) s'étendent angulairement par rapport au plan radial, et sont pratiquement parallèles.
